# EUROPEAN PATENT APPLICATION

(11) **EP 4 318 692 A1**
(43) Date of publication of application: **07.02.2024**
(21) Application number: 22779910.3
(22) Date of filing: 10.03.2022
(51) Int. Cl.: H01M 8/04225, H01M 8/04228, H01M 8/04302, H01M 8/04303, H01M 8/04313, H01M 8/04537, H01M 8/04664, H01M 8/04694, H01M 8/249, H02J 3/38

(54) **POWER GENERATION SYSTEM CONTROL METHOD, CONTROL DEVICE, AND POWER GENERATION SYSTEM**

(30) Priority: 31.03.2021 JP 2021061576; 16.02.2022 JP 2022022508
(71) Applicant: Panasonic Intellectual Property Management Co., Ltd., Osaka-shi, Osaka 540-6207 (JP)
(72) Inventor: FUJII, Tsutomu, Kadoma-shi, Osaka 571-0057 (JP); TAGUCHI, Yoshifumi, Kadoma-shi, Osaka 571-0057 (JP); KAWAZOE, Daisuke, Kadoma-shi, Osaka 571-0057 (JP); HORI, Shinichiro, Kadoma-shi, Osaka 571-0057 (JP)
(74) Representative: Grünecker Patent- und Rechtsanwälte PartG mbB
(86) International application number: PCT/JP2022/010448
(87) International publication number: WO 2022/209687

(57) **Abstract**

A method for controlling a power generation system according to one aspect of the present disclosure includes, in a power generation system including a plurality of power generation units, each of the plurality of power generation units including fuel cell: dividing the plurality of power generation units into a plurality of groups; and controlling the power generation units such that the power generation units deteriorate in a different degree for each group. In addition, a control apparatus according to one aspect of the present disclosure includes: a receiver which receives information indicating a deterioration degree from each of a plurality of power generation units, each of the plurality of power generation units including fuel cell; and a controller which divides the plurality of power generation units into a plurality of groups and controls the power generation units such that the power generation units deteriorate in a different degree for each group.

## Description

### Technical Field

The present disclosure relates to a method for controlling a power generation system, a control apparatus, and a power generation system, and particularly relates to a method for controlling a power generation system including a plurality of power generation units, each of the plurality of power generation units including fuel cell.

### Background Art

Regarding the method for operating a power generation system including a plurality of power generation units, each of the plurality of power generation units including fuel cell, various techniques have been proposed (for example, see PTL 1). According to the technique of PTL 1, in a power generation system including a plurality of power generation units, fuel cell stacks of the power generation units are sequentially operated one after another to avoid unbalanced use of a specific fuel cell stack and shorten the accumulated operation time of each fuel cell stack, thereby extending the life of each fuel cell stack.

### Citation List

### Patent Literature

PTL 1: Japanese Patent No. 5248711

### Summary of Invention

### Technical Problem

However, the technique of PTL 1 does not consider the case where a plurality of power generation units reach the ends of their lives around the same time. For this reason, according to the technique of PTL 1, it is difficult to operate the power generation system stably for a long period of time.

In view of this, the present disclosure provides a method for controlling a power generation system, and the like which make it possible to operate a power generation system including a plurality of power generation units stably for a long period of time. Solution to Problem

In order to achieve the above-described object, a method for controlling a power generation system according to one aspect of the present disclosure includes, in a power generation system including a plurality of power generation units, each of the plurality of power generation units including fuel cell: dividing the plurality of power generation units into a plurality of groups; and controlling the power generation units such that the power generation units deteriorate in a different degree for each group.

In addition, a control apparatus according to one aspect of the present disclosure includes: a receiver which receives information indicating a deterioration degree from each of a plurality of power generation units, each of the plurality of power generation units including fuel cell; and a controller which divides the plurality of power generation units into a plurality of groups and controls the power generation units such that the power generation units deteriorate in a different degree for each group.

In addition, a power generation system according to one aspect of the present disclosure includes: a plurality of power generation units, each of the plurality of power generation units including fuel cell; and the above-described control apparatus. Advantageous Effects of Invention

The present disclosure provides a method for controlling a power generation system, and the like, which make it possible to operate a power generation system including a plurality of power generation units stably for a long period of time.

### Brief Description of Drawings

[Fig. 1] Fig. 1 is a block diagram illustrating a configuration of a power generation system according to an embodiment.
[Fig. 2] Fig. 2 is a block diagram illustrating a configuration of a power generation unit in Fig. 1.
[Fig. 3] Fig. 3 is a flowchart illustrating a procedure of basic processing of a control apparatus in the power generation system according to the embodiment.
[Fig. 4] Fig. 4 is a diagram illustrating an example of a target value set for each group such that the life of the power generation units becomes different for each group.
[Fig. 5] Fig. 5 is a diagram for explaining a control algorithm of Control Example 1.
[Fig. 6] Fig. 6 is a flowchart illustrating a processing procedure of Control Example 1.
[Fig. 7] Fig. 7 is a diagram illustrating an example of time-series selection of groups in Control Example 1.
[Fig. 8] Fig. 8 is a diagram for explaining a control algorithm of Control Example 2.
[Fig. 9] Fig. 9 is a flowchart illustrating a processing procedure of Control Example 2.
[Fig. 10] Fig. 10 is a diagram illustrating an example of time-series selection of groups in Control Example 2.
[Fig. 11] Fig. 11 is a diagram for explaining a control algorithm of Control Example 3.
[Fig. 12] Fig. 12 is a flowchart illustrating a processing procedure of Control Example 3.
[Fig. 13] Fig. 13 is a diagram for explaining a control algorithm of Control Example 4.
[Fig. 14] Fig. 14 is a flowchart illustrating a processing procedure of Control Example 4.

### Description of Embodiments

### (Underlying Knowledge Forming Basis of the Present Disclosure)

The technique of PTL 1 does not consider the case where a plurality of power generation units reach the ends of their lives around the same time. For this reason, when the plurality of power generation units have reached the ends of their lives around the same time, it is necessary to replace many power generation units around the same time. In addition, a problem that the power generation output significantly decreases at the time of replacing the power generation units also occurs. As a result, according to the technique of PTL 1, it is difficult to operate the power generation system stably for a long period of time.

In view of this, the present inventors conceived of a method for controlling a power generation system, and the like in which a plurality of power generation units are divided into a plurality of groups such that the power generation units reach the ends of their lives at different times on a group basis.

Specifically, a method for controlling a power generation system according to one aspect of the present disclosure includes, in a power generation system including a plurality of power generation units, each of the plurality of power generation units including fuel cell, dividing the plurality of power generation units into a plurality of groups; and controlling the power generation units such that the power generation units deteriorate in a different degree for each group. Such a deterioration control reduces the occurrence of a situation where power generation units of two or more groups reach the maintenance time at the same timing, thus enabling the power generation system including a plurality of power generation units to be operated stably for a long period of time.

Here, a difference may be provided to a deterioration degree of the power generation units for each group so that when the power generation units of a certain group are being replaced because the deterioration degree of the power generation units has reached an upper limit, the deterioration degree of the power generation units of another group does not reach the upper limit. This reduces the occurrence of a problem that there is a necessity to replace many power generation units around the same time and a problem that the power generation output hence decreases significantly at the time of replacing the power generation units.

In addition, the deterioration degree may correspond to a parameter indicating an operation amount of the power generation unit, and the power generation units may be controlled such that when the parameter reaches an upper limit value, the power generation units are not activated next time. This ensures a time for replacing the power generation units when the power generation units have reached the ends of their lives.

Here, the parameter may include a parameter correlated with an accumulated power generation time of the power generation unit. This makes it possible to control the power generation units such that the power generation units deteriorate in a different degree for each group based on the parameter correlated with an accumulated power generation time.

At this time, when the number of the groups to generate power is to be increased, the group which is caused to start power generation may be selected in ascending order of a first ratio of a parameter correlated with a pace of increase in the accumulated power generation time to a target value of the parameter. Then, when the number of the groups to generate power is to be decreased, the group which is caused to shut down power generation may be selected in descending order of a first ratio of a parameter correlated with a pace of increase in the accumulated power generation time to a target value of the parameter. In this way, by controlling the operating rate of each group, it becomes possible to control the power generation units such that the power generation units deteriorate in a different degree for each group.

In addition, the parameter may include a parameter correlated with the number of times of power generation of the power generation units. This makes it possible to control the power generation units such that the power generation units deteriorate in a different degree for each group based on the parameter correlated with the number of times of power generation.

At this time, when the number of the groups to generate power is to be increased, the group which is caused to start power generation may be selected in ascending order of a second ratio of a parameter correlated with a pace of increase in the number of times of power generation to a target value of the parameter. Then, when the number of the groups to generate power is to be decreased, the group which is caused to shut down power generation may be selected in ascending order of a second ratio of a parameter correlated with a pace of increase in the number of times of power generation to a target value of the parameter. In this way, by controlling the operating frequency of each group, it becomes possible to control the power generation units such that the power generation units deteriorate in a different degree for each group.

In addition, the parameter may include a parameter correlated with an accumulated power generation time of the power generation units and a parameter correlated with the number of times of power generation of the power generation units. At this time, when the number of the groups to generate power is to be increased, the group which is caused to start power generation may be selected in ascending order of a second ratio of a parameter correlated with a pace of increase in the number of times of power generation to a target value of the parameter. In addition, when the number of the groups to generate power is to be decreased, the group which is caused to shut down power generation may be selected in descending order of a first ratio of a parameter correlated with a pace of increase in the accumulated power generation time to a target value of the parameter. In this way, by controlling the first ratio and the second ratio of each group, it becomes possible to control the power generation units such that the power generation units deteriorate in a different degree for each group.

In addition, when the number of the groups to generate power is to be increased, the group which is caused to start power generation may be selected in ascending order of a root sum square of a first ratio of a parameter correlated with a pace of increase in the accumulated power generation time to a target value of the parameter and a second ratio of a parameter correlated with a pace of increase in the number of times of power generation to a target value of the parameter. In addition, when the number of the groups to generate power is to be decreased, the group which is caused to shut down power generation may be selected in descending order of a ratio of a first ratio of a parameter correlated with a pace of increase in the accumulated power generation time to a target value of the parameter to a second ratio of a parameter correlated with a pace of increase in the number of times of power generation to a target value of the parameter. This makes it possible to make the first ratio and the second ratio of each group approach the target values, to control the power generation units such that the power generation units deteriorate in a different degree for each group.

In addition, a control apparatus in a power generation system according to one aspect of the present disclosure includes: a receiver which receives information indicating a deterioration degree from each of a plurality of power generation units, each of the plurality of power generation units including fuel cell; and a controller which divides the plurality of power generation units into a plurality of groups, and controls the power generation units such that the power generation units deteriorate in a different degree for each group. In addition, a power generation system according to one aspect of the present disclosure includes: a plurality of power generation units, each of the plurality of power generation units including fuel cell; and the above-described control apparatus. This reduces the occurrence of a situation where two or more groups reach the maintenance time at the same timing, thus enabling a power generation system including a plurality of power generation units to be operated stably for a long period of time.

### (Embodiments)

Hereinafter, embodiments of the present disclosure will be described in detail by using the drawings. Note that all the embodiments described below represent specific examples of the present disclosure. The numerical values, shapes, materials, constituents, arrangement of positions and forms of connection of the constituents, steps, the orders of the steps, and the like described in the following embodiments are examples, and are not intended to limit the present disclosure. In addition, each drawing does not necessarily exactly illustrate each configuration. In each drawing, substantially the same configurations are denoted by the same reference signs, and duplicate descriptions are omitted or simplified.

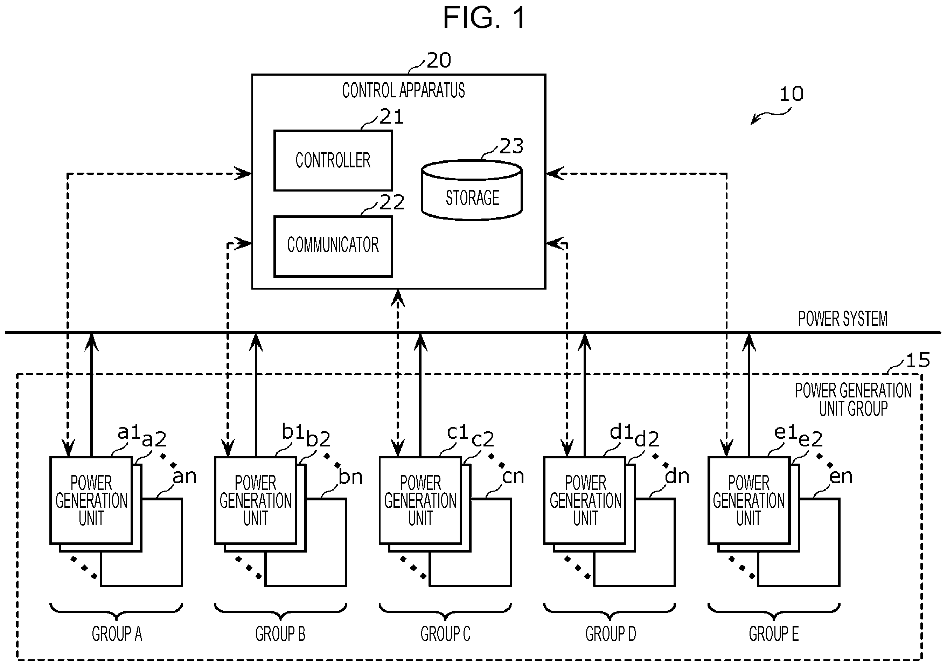

Fig. 1 is a block diagram illustrating a configuration of a power generation system 10 according to an embodiment. Note that in Fig. 1, the solid arrows indicate the flow of power, and the dashed arrows indicate the flow of communication information. The power generation system 10 is a system which supplies a large amount of power to a power system, and includes: a power generation unit group 15 which is composed of a plurality of power generation units including fuel cell stacks; and a control apparatus 20 which controls the power generation unit group 15.

The power generation unit group 15 is divided into power generation units a1 to an which belong to group A, power generation units b1 to bn which belong to group B, power generation units c1 to cn which belong to group C, power generation units d1 to dn which belong to group D, and power generation units e1 to en which belong to group E. Note that each group is composed of at least one power generation unit (in other words, one or more power generation units). Note that all the power generation units which belong to one group are also referred to simply as "the power generation units of the group".

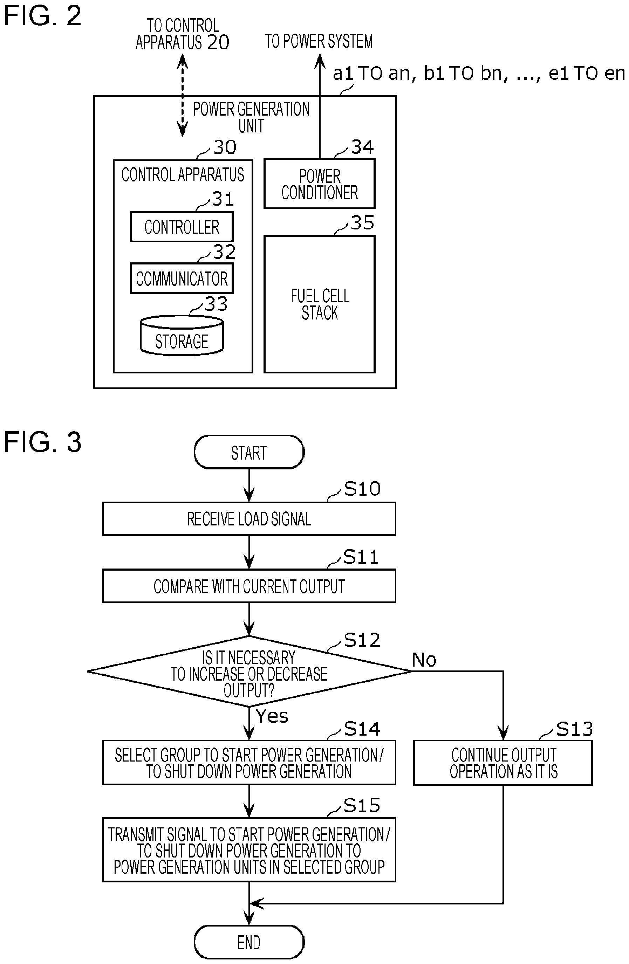

As illustrated in Fig. 2, each power generation unit includes a control apparatus 30, a power conditioner 34, and a fuel cell stack 35. Fig. 2 is a block diagram illustrating a configuration of each power generation unit in Fig. 1. The fuel cell stack 35 is a structure in which a plurality of fuel cells are stacked. The power conditioner 34 is a conversion circuit which converts direct current power generated in the fuel cell stack 35 to alternating current power and outputs the alternating current power to the power system. The control apparatus 30 is an apparatus which controls the power conditioner 34 and the fuel cell stack 35, and includes a controller 31, a communicator 32, and a storage 33. The communicator 32 is a communication interface which communicates with the control apparatus 20 of the power generation system 10. The storage 33 is a memory which stores the upper limit value for the number of times of power generation of the power generation unit (for example, 4500 times), the upper limit value for the power generation time (for example, 90000 hours), the current number of times of power generation, the current power generation time, and the like. The controller 31 is a controller which controls respective constituents (the communicator 32, the storage 33, the power conditioner 34, and the fuel cell stack 35), and includes, for example, a memory which holds programs, a processor which executes the programs, and the like.

The control apparatus 20 in the power generation system 10 illustrated in Fig. 1 includes a controller 21, a communicator 22, and a storage 23. The communicator 22 is a communication interface which communicates with the power generation unit group 15, and is also an example of a receiver which receives information indicating a deterioration degree from each power generation unit. The storage 23 is a memory which stores various data for controlling the power generation unit group 15. The controller 21 is an example of a controller which divides the power generation unit group 15 into a plurality of groups and controls the power generation units such that the power generation units deteriorate in a different degree for each group. More specifically, the controller 21 is a controller which controls respective constituents (the communicator 22 and the storage 23), and includes, for example, a memory which holds programs, a processor which executes the programs, and the like.

The control made by the control apparatus 20 on the power generation unit group 15 is as follows. That is, the control apparatus 20 basically controls the power generation unit group 15 such that the power generation units deteriorate in a different degree for each of the groups A to E. That is, the control apparatus 20 provides a difference to the deterioration degree of the power generation units for each group so that when the power generation units of a certain group are being replaced because the deterioration degree of the power generation units has reached the upper limit, the deterioration degree of the power generation units in another group does not reach the upper limit. For example, the control apparatus 20 controls the power generation units in each group such that when the period since the start of use of the power generation system 10 reaches 8 years, 9 years, 10 years, 11 years, and 12 years for the respective groups A, B, C, D, and E, the deterioration degrees of the power generation units in the groups reach the upper limit, that is, reach the ends of their operating lives.

Note that in the case where there are a plurality of power generation units belonging to the group whose deterioration degree has reached the upper limit, all of the plurality of power generation units are replaced. In addition, in the case where there are a plurality of power generation units belonging to a certain group, as the deterioration degree of the power generation units of the certain group, a representative value may be used. The representative value may be any representative value. For example, the representative value may be the average value of the deterioration degrees of the respective power generation units belonging to the certain group, or may be the median value thereof, or may be the maximum value or the minimum value thereof.

In addition, the reason why the deterioration degrees of the respective power generation units which belong to a certain group (for example, group A) become different is as follows. That is, in the case where various partial loads (for example, outputs of 50% and 70% of the total output of a certain group, that is, power generation using power generation units of 50% and 70% of all the power generation units in the certain group) are repeated for a demanded power generation plan, variations are generated in the power generation time and the number of times of turning ON-OFF of power generation in the plurality of power generation units in the group. For example, in the case where currently 100 power generation units belong to each group of the groups A, B, and C and an output per power generation unit is 5 kW, and where the demanded powers are 500 kW, 1000 kW, and 1500 kW, when a state where all the power generation units which belong to each group can generate power is maintained, the demanded powers are achieved by performing control such that the number of the groups to generate power is 1, 2, and 3, respectively.

Meanwhile, in the case where the demanded power is 750 kW, the demanded power is achieved by performing control such that power is generated by two groups, that is, one group in a state where all the power generation units are caused to generate power (that is, 5 kW × 100 units = 500 kW) and one group in a state where 50 power generation units are caused to generate power (that is, 5 kW × 50 units = 250 kW). Furthermore, in the case where the demanded power has been changed from 750 kW to 1000 kW, the demanded power is achieved by causing the remaining 50 units to generate power in the group in the state where 50 power generation units have already been generating power. As described above, variations are generated in the operation time and the number of times of activation and shutdown by controlling power generation of the power generation units in a group in accordance with the demanded power, so that the deterioration degrees of the power generation units become different even when the power generation units belong to the same group.

The control made by the control apparatus 20 on the power generation unit group 15 is as follows. That is, the control apparatus 20 basically controls the power generation unit group 15 such that the power generation units deteriorate in a different degree for each of the groups A to E. That is, the control apparatus 20 provides a difference to the deterioration degree of the power generation units for each group so that when power generation units in a certain group are being replaced because the deterioration degree of the power generation units has reached the upper limit, the deterioration degree of the power generation units in another group does not reach the upper limit. For example, the control apparatus 20 controls the power generation units in each group such that when the period since the start of use of the power generation system 10 reaches 8 years, 9 years, 10 years, 11 years, and 12 years for the respective groups A, B, C, D, and E, the deterioration degree of the power generation units in the groups reach the upper limit, that is, reach the ends of their operating lives.

Here, the deterioration degree of the power generation units corresponds to a parameter indicating the operation amount of the power generation units. When the parameter reaches the upper limit value, the control apparatus 20 controls the group regarding the parameter which has reached the upper limit value (that is, the power generation units which belong to the group) so that the group is not activated next time. Specifically, the parameter is at least one of a parameter correlated with an accumulated power generation time of the power generation units or a parameter correlated with the number of times of power generation operation (hereinafter, the number of times of power generation) performed by the power generation units.

Here, the "parameter correlated with an accumulated power generation time" may be any parameter as long as the parameter is a parameter correlated with an accumulated power generation time of the power generation units, and may be, for example, the accumulated power generation time itself of the power generation units, the accumulated supply time of the fuel gas to the power generation units, the accumulated supply time of the oxidant gas to the power generation units, or the like.

In addition, the parameter correlated with the number of times of power generation may be any parameter as long as the parameter is a parameter correlated with the number of times of power generation of the power generation units, and may be, for example, the number of times of power generation itself, the number of times of activation, the number of times of shutdown, or the like.

Note that the parameter indicating the operation amount of each power generation unit can be controlled by the control apparatus 20 controlling the respective timings of the start of power generation and the shutdown of power generation of each power generation unit.

In addition, the "duration of use" is an elapsed time from when the use of the power generation units is started, and may be an accumulated power distribution time or may be an elapsed time from the first activation of the power generation units. In addition, the "accumulated power generation time" is an accumulative power generation time from when the use of the power generation units are started.

In addition, a target value of a parameter indicating a pace of increase in the operation amount is set for each group. The control apparatus 20 controls the power generation units of each group such that the above parameter of the power generation units of each group becomes the target value set for the group (hereinafter, this control is also referred to as "deterioration control"). The target value may be updated along with the elapse of the duration of use of the power generation units.

Here, the above parameter is specifically at least one of a parameter correlated with a pace of increase in the accumulated power generation time or a parameter correlated with a pace of increase in the number of times of power generation.

In addition, the "parameter correlated with a pace of increase in the accumulated power generation time" may be any parameter as long as the parameter is a parameter correlated with a pace of increase in the accumulated power generation time of the power generation units, and may be, for example, a ratio of the accumulated power generation time of the power generation units to the duration of use of the power generation units, a ratio of the accumulated supply time of the fuel gas to the power generation units to the duration of use of the power generation units, a ratio of the accumulated supply time of the oxidant gas to the power generation units to the duration of use of the power generation units, or the like.

In addition, the parameter correlated with a pace of increase in the number of times of power generation may be any parameter as long as the parameter is a parameter correlated with a pace of increase in the number of times of power generation of the power generation unit, and may be, for example, a ratio of the number of times of power generation of the power generation units to the duration of use of the power generation units, a ratio of the number of times of activation of the power generation units to the duration of use of the power generation units, a ratio of the number of times of shutdown of the power generation units to the duration of use of the power generation units, or the like.

Next, the operation of the power generation system 10 according to the present embodiment configured as described above will be described.

Fig. 3 is a flowchart illustrating a procedure of basic processing of the control apparatus 20 in the power generation system 10 (that is, method for controlling the power generation system 10). The control apparatus 20 receives, from a load to be supplied with power by the power generation system 10, a load signal indicating power (hereinafter, this power is also referred to as "demanded power") to be supplied to the load, through a power-line communication or the like via the power system (S10).

Next, the control apparatus 20 compares the demanded power indicated by the received load signal and the current output power of the power generation system 10 (hereinafter, this output power is also referred to as "current power") (S11). Note that since the control apparatus 20 has stored the current output power received from the power generation unit group 15 in the storage 23 while controlling the output power of the power generation unit group 15, the control apparatus 20 can find the current output power of the power generation system 10 by referring to the storage 23.

Then, the control apparatus 20 determines whether or not it is necessary to increase or decrease the output power based on the result of comparison between the demanded power and the current power (S12). Specifically, if the current power is within a certain range (for example, within ±5%) of the demanded power, the control apparatus 20 determines that it is not necessary to increase or decrease the output power (No in S12), and continues the operation with the output power as it is (S13).

On the other hand, if the current power is not within the certain range (for example, within ±5%) of the demanded power, the control apparatus 20 determines that it is necessary to increase or decrease the output power (Yes in S12), selects the group to start power generation or to shut down power generation (S14), and transmits a signal to start power generation or to shut down power generation to the power generation units in the selected group through the communicator 22 (S15). Note that in the case where there are a plurality of power generation units in the group, the number of power generation units to start power generation or to shut down power generation is adjusted as appropriate depending on the amount of increase or the amount of decrease in the output power demanded in the group to start power generation or to shut down power generation.

By such basic processing performed by the control apparatus 20, the power generation units are caused to start power generation or to shut down power generation in accordance with the demanded power from the load, so that the output power of the power generation system 10 follows the demanded power.

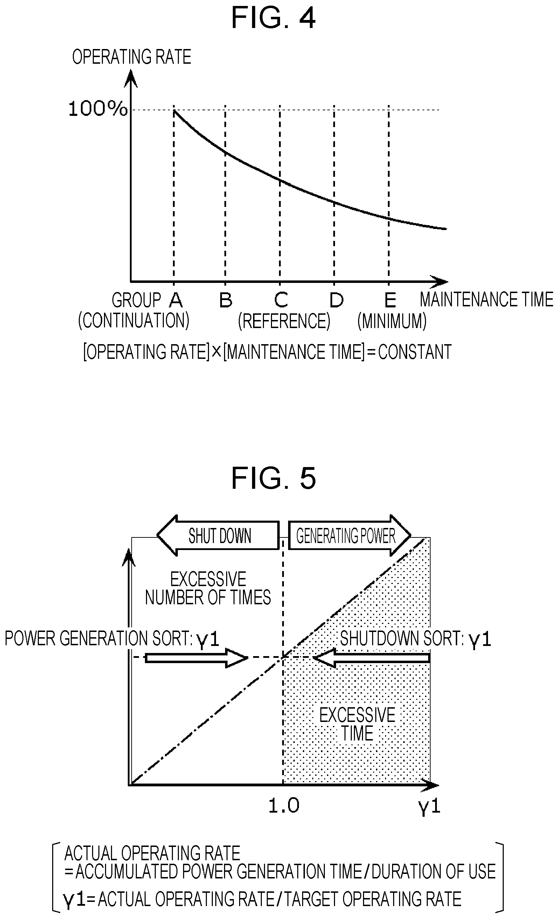

Fig. 4 is a diagram illustrating an example of the target value set for each group such that the life of the power generation units becomes different for each group. Here, the horizontal axis indicates a "maintenance time". The "maintenance time" is a time when the power generation units need to be replaced because the power generation units reach the ends of their lives, that is, the deterioration degree of the power generation units reaches the upper limit. The vertical axis indicates an "operating rate". The "operating rate" is a rate at which the power generation units are operating, and may be, for example, a parameter correlated with a pace of increase in the accumulated power generation time, and is specifically, the percentage of the accumulated power generation time to the accumulated power distribution time (that is, the accumulated power generation time/the accumulated power distribution time × 100). For the "operating rate" and the "maintenance time", a relation that the product of these is constant is established.

Fig. 4 illustrates an example in which target values are set such that the actual operating rates of the groups A, B, C, D, and E become 100%, 90%, 80%, 70%, and 60%, respectively. In such setting, in the case where the operation has been achieved as targeted, the maintenance times of the groups A, B, C, D, and E become, for example, 8 years, 9 years, 10 years, 11 years, and 12 years, respectively. Note that the setting of the target values (here, the operating rates) can be specifically achieved by recording the target values in the storage 23 of the control apparatus 20. Such setting of target values may be performed by manual input into the control apparatus 20, or may be automatically performed by the control apparatus 20 in accordance with a predetermined program.

Next, the detail of the deterioration control performed by the control apparatus 20 such that the parameter indicating the pace of increase in the operation amount of the power generation units of each group becomes the target value set for the group will be described. Here, since the detail of the deterioration control is different depending on the type of parameter, the detail of the deterioration control will be described for each type of parameter below. Note that the determination on which parameter is used to perform the deterioration control may be performed by manual input into the control apparatus 20 or may be automatically performed by the control apparatus 20 in accordance with a predetermined program.

### (Control Example 1)

As Control Example 1, a case where the control apparatus 20 performs the deterioration control by using γ1 (actual operating rate/target operating rate), which is an example of a ratio of the parameter correlated with a pace of increase in the accumulated power generation time to the target value of the parameter (this ratio is also referred to as "first ratio"), will be described in detail.

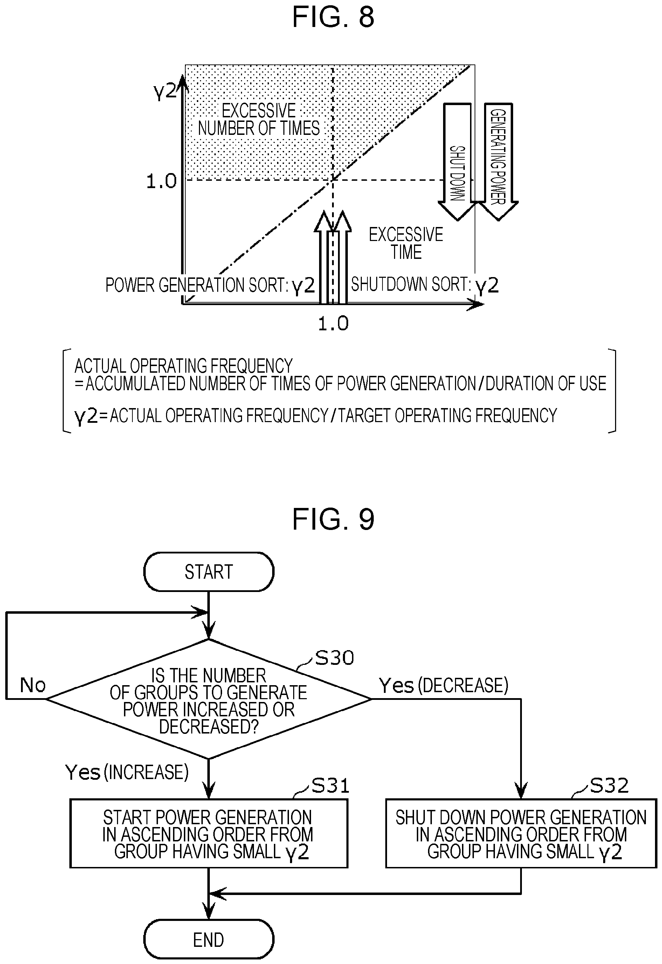

Fig. 5 is a diagram for explaining a control algorithm of Control Example 1. The horizontal axis indicates γ1 (that is, an example of the first ratio). Here, γ1 = the actual operating rate/the target operating rate. In addition, the actual operating rate = the accumulated power generation time/the duration of use. The target operating rate is a target value of the operating rate. Note that although the vertical axis indicates γ2 in Fig. 8, which will be described later, the vertical axis is ignored in the description of this Control Example 1.

γ1 has the following characteristic. That is, as indicated by "SHUT DOWN" in Fig. 5, when the power generation units have shut down power generation, γ1 decreases because γ1 depends on the actual operating rate. On the other hand, as indicated by "GENERATING POWER" in Fig. 5, when the power generation units are generating power, γ1 increases because γ1 depends on the actual operating rate. From such a characteristic of γ1, the following control is performed in Control Example 1.

That is, as indicated by "POWER GENERATION SORT γ1" in Fig. 5, when the output power of the power generation system 10 is to be increased, control is performed such that a group having small γ1 is selected with priority from among the groups which have shut down power generation, and is caused to start power generation, so that γ1 of the group approaches 1.0. On the other hand, as indicated by "SHUTDOWN SORT γ1" in Fig. 5, when the output power of the power generation system 10 is to be decreased, control is performed such that a group having large γ1 is selected with priority from among the groups which are generating power, and is caused to shut down power generation, so that γ1 of the group approaches 1.0.

In this way, in Control Example 1, the deterioration control is performed by using γ1 (that is, an example of the first ratio) as a parameter for selecting a group which is caused to start power generation or to shut down power generation.

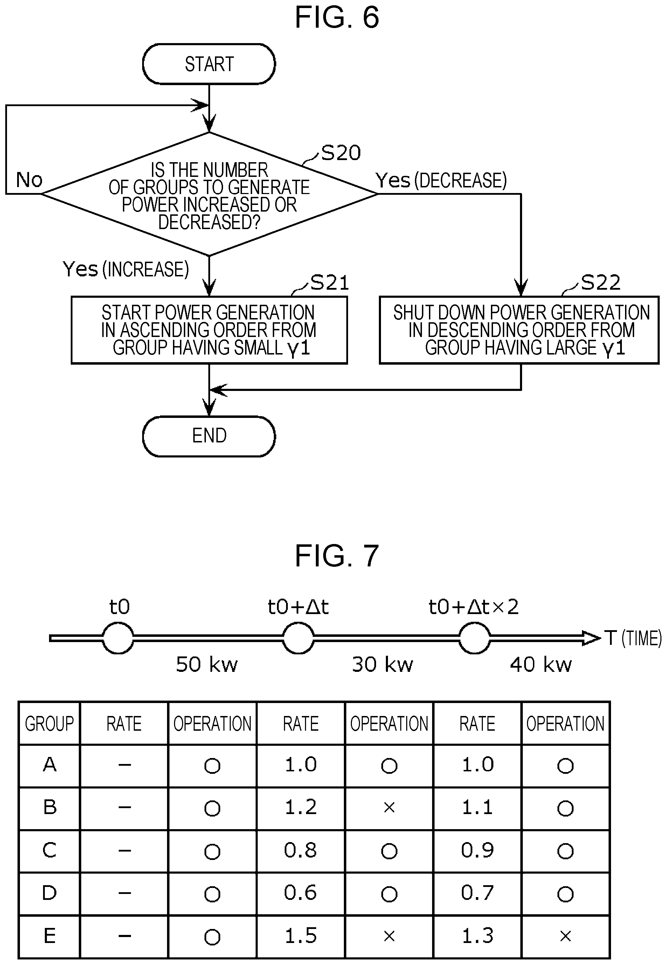

Fig. 6 is a flowchart illustrating a processing procedure of Control Example 1. This processing procedure corresponds to one specific example of steps S12 to S15 in Fig. 3. Note that in this Control Example 1, the target operating rates of the groups A, B, C, D, and E are set to 100%, 90%, 80%, 70%, and 60%, respectively, as illustrated in Fig. 4, for example.

First, the control apparatus 20 determines whether or not the number of the groups to generate power is increased or decreased by comparing the demanded power and the current power (S20).

As a result, if the control apparatus 20 determines to increase the number of the groups to generate power ("Yes (INCREASE)" in S20), the control apparatus 20 selects a necessary number of groups while giving priority to groups having small γ1 among the groups which have shut down power generation, and causes the power generation units of the selected groups to start power generation (S21). Note that in the case where a plurality of groups are selected, the order of causing the groups to start power generation is any order. For example, the groups may be caused to start power generation in the order of selection, or may be caused to start power generation irrespective of the order of selection, or all the selected groups may be caused to start power generation simultaneously. In addition, the "cause to start power generation" encompasses causing the power generation units which have shut down to start power generation and causing the power generation units in standby to generate power. The necessary number for groups to be selected is determined in consideration of the generated power which increases when the power generation units of each group are caused to generate power for a constant duration, and the output power to be increased (= the demanded power-the current power).

On the other hand, if the control apparatus 20 determines to decrease the number of the groups to generate power ("Yes (DECREASE)" in S20), the control apparatus 20 selects a necessary number of groups while giving priority to groups having large γ1 among the groups which are generating power, and causes the power generation units of the selected groups to shut down power generation (S22). Note that in the case where a plurality of groups are selected, the order of causing the groups to shut down power generation is any order. For example, the groups may be caused to shut down power generation in the order of selection, or may be caused to shut down power generation irrespective of the order of selection, or all the selected groups may be caused to shut down power generation simultaneously. In addition, the "cause to shut down power generation" encompasses causing the power generation units which are generating power to shut down power generation and causing the power generation units in standby to shut down power generation. The necessary number for groups to be selected is determined in consideration of the generated power which decreases when the power generation units of each group are caused to shut down power generation for a constant duration, and the output power to be decreased (= the current power-the demanded power).

Fig. 7 is a diagram illustrating an example of time-series selection of groups in Control Example 1. In the upper part of Fig. 7, the elapse of time and an example of change in the output power of the power generation system 10 are illustrated, and in the lower part of Fig. 7, the status of "RATE (γ1)" and "OPERATION" (∘ means operating, and × means shutdown) of the power generation units in the groups A to E during each time is illustrated.

In Fig. 7, in the duration of time t0 to time t0 + Δt, the power generation units of all the groups A to E are operating, so that the power generation system 10 is operated with an output power of 50 kw, and as a result, the rates (γ1) of the groups A, B, C, D, and E at time t0 + Δt are 1.0, 1.2, 0.8, 0.6, and 1.5, respectively.

At time t0 + Δt, since the control apparatus 20, which has received a demanded power of 30 kw, determines to decrease the number of the groups to generate power ("Yes (DECREASE)" in S20 in Fig. 6), the control apparatus 20 selects groups having large rates (γ1) (here, the group E having a rate (γ1) of 1.5 and the group B having a rate (γ1) of 1.2) with priority from among the groups A to E which are generating power, and causes the power generation units of the selected groups E and B to shut down power generation (S22 in Fig. 6). Note that in this Control Example 1, the power generated by one group is assumed to be 10 kw.

As a result of causing the power generation units of the groups E and B to shut down power generation, in the next duration (time t0 + Δt to time t0 + Δt × 2, only the power generation units of the three groups A, C, and D generate power, so that the output power of the power generation system 10 becomes 30 kw, and the rates (γ1) of the groups A, B, C, D, and E at time t0 + Δt × 2 become 1.0, 1.1, 0.9, 0.7, and 1.3, respectively.

At time t0 + Δt × 2, since the control apparatus 20, which has received a demanded power of 40 kw, determines to increase the number of the groups to generate power ("Yes (INCREASE)" in S20 in Fig. 6), the control apparatus 20 selects a group having a small rate (γ1) (here, the group B having a rate (γ1) of 1.1) with priority from among the groups B and E which have shut down power generation, and causes the power generation units of the selected group B to start power generation (S21 in Fig. 6).

As a result, in the next duration (from time t0 + Δt × 2), only the power generation units of the four groups A to D generate power, so that the output power of the power generation system 10 becomes 40 kw.

With such control, the start of power generation/shutdown of power generation of the power generation units is controlled such that the rate (γ1) of each of the groups A to D approaches 1.0 for every constant duration Δt. As a result, the maintenance times of the groups A, B, C, D, and E whose target operating rates are set to 100%, 90%, 80%, 70%, and 60%, respectively, approach 8 years, 9 years, 10 years, 11 years, and 12 years, respectively. This reduces the occurrence of a situation where two or more groups reach the maintenance time at the same timing, thus reducing the occurrence of a problem that there is a necessity to replace many power generation units around the same time and a problem that the power generation output hence decreases significantly at the time of replacing the power generation units.

Note that the target operating rate of each group may be updated along with the elapse of the duration of use of the power generation units.

In addition, although in Control Example 1, γ1 (that is, an example of the first ratio) is used as the parameter for selecting groups to start power generation or to shut down power generation, γ1 may be used not only for this but also for determining the power generation units to start power generation or to shut down power generation among the plurality of power generation units in the group.

### (Control Example 2)

As Control Example 2, a case where the control apparatus 20 performs the deterioration control by using γ2 (actual operating frequency/target operating frequency), which is an example of a ratio of the parameter correlated with a pace of increase in the number of times of power generation to the target value of the parameter (this ratio is also referred to as "second ratio") will be described in detail. The "operating frequency" is a power generating frequency of the power generation unit, and is, for example, the parameter correlated with a pace of increase in the number of times of power generation, and is specifically the number of times of power generation relative to the duration of use (that is, the number of times of power generation/the duration of use).

Fig. 8 is a diagram for explaining a control algorithm of Control Example 2. The vertical axis indicates γ2 (that is, an example of the second ratio). Here, γ2 = the actual operating frequency/the target operating frequency. In addition, the actual operating frequency = the number of times of power generation/the duration of use. The target operating frequency is a target value of the operating frequency. Note that although the horizontal axis indicates γ1 in Fig. 5, the horizontal axis is ignored in the description of this Control Example 2.

γ2 has the following characteristic. That is, as indicated by "SHUT DOWN" in Fig. 8, when the power generation units have shut down power generation, γ2 decreases because γ2 depends on the actual operating frequency. Similarly, as indicated by "GENERATING POWER" in Fig. 8, when the power generation units are generating power as well, γ2 similarly decreases because γ2 depends on the actual operating frequency. From such a characteristic of γ2, the following control is performed in Control Example 2.

That is, as indicated by "POWER GENERATION SORT y2" in Fig. 8, when the output power of the power generation system 10 is to be increased, control is performed such that a group having small γ2 is selected with priority from among the groups which have shut down power generation, and is caused to start power generation, so that γ2 of the group approaches 1.0. Similarly, as indicated by "SHUTDOWN SORT y2" in Fig. 8, when the output power of the power generation system 10 is to be decreased, a group having small γ2 is selected with priority from among the groups which are generating power, and is caused to shut down power generation, so that γ2 of the group approaches 1.0.

In this way, in Control Example 2, the deterioration control is performed by using γ2 (that is, an example of the second ratio) as a parameter for selecting a group which is caused to start power generation or to shut down power generation.

Fig. 9 is a flowchart illustrating a processing procedure of Control Example 2. This processing procedure corresponds to one specific example of steps S12 to S15 in Fig. 3. Note that in this Control Example 2, the target operating frequencies of the groups A, B, C, D, and E are set such that the maintenance times of the groups A, B, C, D, and E become, for example, 8 years, 9 years, 10 years, 11 years, and 12 years, respectively.

First, the control apparatus 20 determines whether or not the number of the groups to generate power is increased or decreased by comparing the demanded power and the current power (S30).

As a result, if the control apparatus 20 determines to increase the number of the groups to generate power ("Yes (INCREASE)" in S30), the control apparatus 20 selects a necessary number of groups while giving priority to groups having small γ2 among the groups which have shut down power generation, and causes the power generation units of the selected groups to start power generation (S31). The necessary number for groups to be selected is determined in consideration of the generated power which increases when the power generation units of each group are caused to generate power for a constant duration, and the output power to be increased (= the demanded power-the current power).

On the other hand, if the control apparatus 20 determines to decrease the number of the groups ("Yes (DECREASE)" in S30), the control apparatus 20 selects a necessary number of groups while giving priority to groups having small γ2 among the groups which are generating power, and causes the power generation units of the selected groups to shut down power generation (S32). The necessary number for groups to be selected is determined in consideration of the generated power which decreases when the power generation units of each group are caused to shut down power generation for a constant duration, and the output power to be decreased (= the current power-the demanded power).

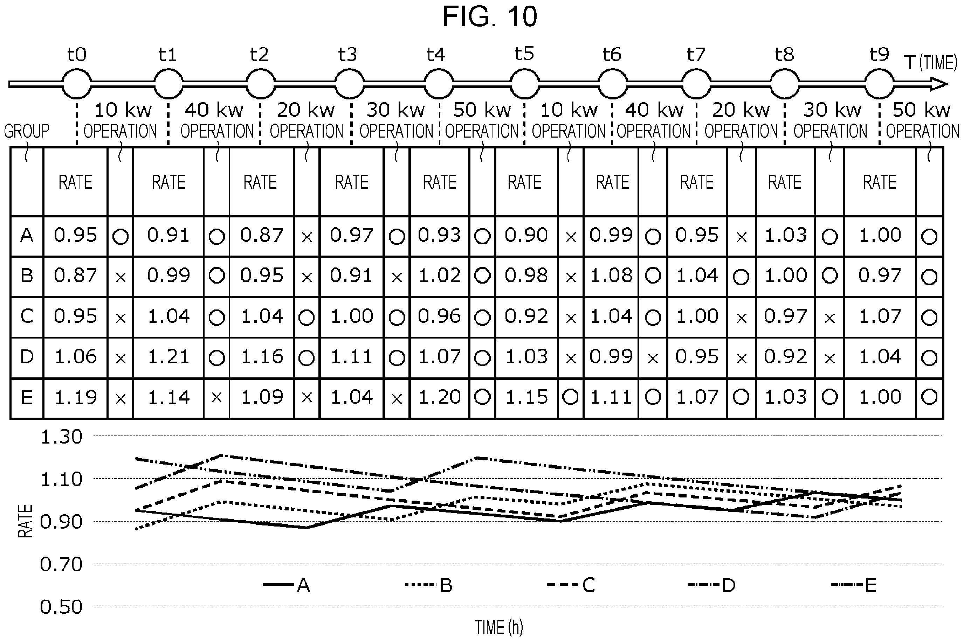

Fig. 10 is a diagram illustrating an example of time-series selection of groups in Control Example 2. In the upper part of Fig. 10, the elapse of time and an example of change in the output power of the power generation system 10 are illustrated, and in the lower part of Fig. 10, the status of "RATE (y2)" and "OPERATION" (∘ means operating, and × means shutdown) of the power generation units of the groups A to E during each time is illustrated. Note that the interval between each time t0, t1, ..., t9 and adjacent time is Δt (not shown) as in the case of Control Example 1 illustrated in Fig. 7.

In Fig. 10, it is assumed that at time t0, only the power generation units of the group A are operating, so that the power generation system 10 is operated with an output power of 10 kw, and as a result, the rates (y2) of the groups A, B, C, D, and E in time t0 to time t1 are 0.95, 0.87, 0.95, 1.06, and 1.19, respectively.

At time t1, the control apparatus 20, which has received a demanded power of 40 kw, determines to increase the number of the groups to generate power ("Yes (INCREASE)" in S30 in Fig. 9), the control apparatus 20 selects groups having small rates (y2) (here, the group B having a rate (γ2) of 0.87, the group C having a rate (γ2) of 0.95, and the group D having a rate (γ2) of 1.06) with priority from among the groups B to E which have shut down power generation, and causes the power generation units of the selected groups B to D to start power generation (S31 in Fig. 9). Note that in this Control Example 2, the power generated by one group is assumed to be 10 kw. For this reason, at this time 11, three groups are selected in order to increase the output power by 30 kw. In addition, the order of causing the selected groups B to D to start power generation is any order. For example, the groups may be caused to start power generation in the order of selection, or may be caused to start power generation irrespective of the order of selection, or the selected groups B to D may be caused to start power generation simultaneously.

As a result of causing the power generation units of the groups B to E to start power generation, in time t1 to time t2, the power generation units of the four groups A to D in total generate power, so that the output power of the power generation system 10 becomes 40 kw, and the rates (y2) of the groups A, B, C, D, and E become 0.91, 0.99, 1.04, 1.21, and 1.14, respectively.

At time t2, since the control apparatus 20, which has received a demanded power of 20 kw, determines to decrease the number of the groups to generate power ("Yes (DECREASE)" in S30 in Fig. 9), the control apparatus 20 selects groups having small rates (y2) (here, the group A having a rate (γ2) of 0.91, and the group B having a rate (γ2) of 0.99) with priority from among the groups A to D which are generating power, and causes the power generation units of the selected groups A and B to shut down power generation (S32 in Fig. 9). Note that at this time t2, two groups are selected in order to decrease the output power by 20 kw. In addition, the order of causing the groups A and B to shut down power generation is any order. For example, the groups may be caused to shut down power generation in the order of selection, or may be caused to shut down power generation irrespective of the order of selection, or the selected groups A and B may be caused to shut down power generation simultaneously.

As a result of causing the power generation units of the groups A and B to shut down power generation, at time t2, the power generation units of the two groups C and D in total generate power, so that the output power of the power generation system 10 becomes 20 kw, and the rates (y2) of the groups A, B, C, D, and E become 0.87, 0.95, 1.04, 1.16, and 1.09, respectively.

With such control, the start of power generation/shutdown of power generation of the power generation units is controlled such that the rate (y2) of each of the groups A to D approaches 1.0 for every constant duration Δt. As a result, the maintenance times of the groups A, B, C, D, and E whose target operating frequencies are set such that the maintenance times become 8 years, 9 years, 10 years, 11 years, and 12 years, respectively, approach 8 years, 9 years, 10 years, 11 years, and 12 years, respectively. This reduces the occurrence of a situation where two or more groups reach the maintenance time at the same timing, thus reducing the occurrence of a problem that there is a necessity to replace many power generation units around the same time and a problem that the power generation output hence decreases significantly at the time of replacing the power generation units.

Note that the target operating frequency of each group may be updated along with the elapse of the duration of use of the power generation units.

In addition, although in Control Example 2, γ2 (that is, an example of the second ratio) is used as the parameter for selecting groups to start power generation or to shut down power generation, γ2 may be used not only for this but also for determining the power generation units to start power generation or to shut down power generation among the plurality of power generation units in the group.

### (Control Example 3)

As Control Example 3, a case where the control apparatus 20 performs the deterioration control by using both γ1 (that is, an example of the first ratio) used in Control Example 1 and γ2 (that is, an example of the second ratio) used in Control Example 2 will be described in detail.

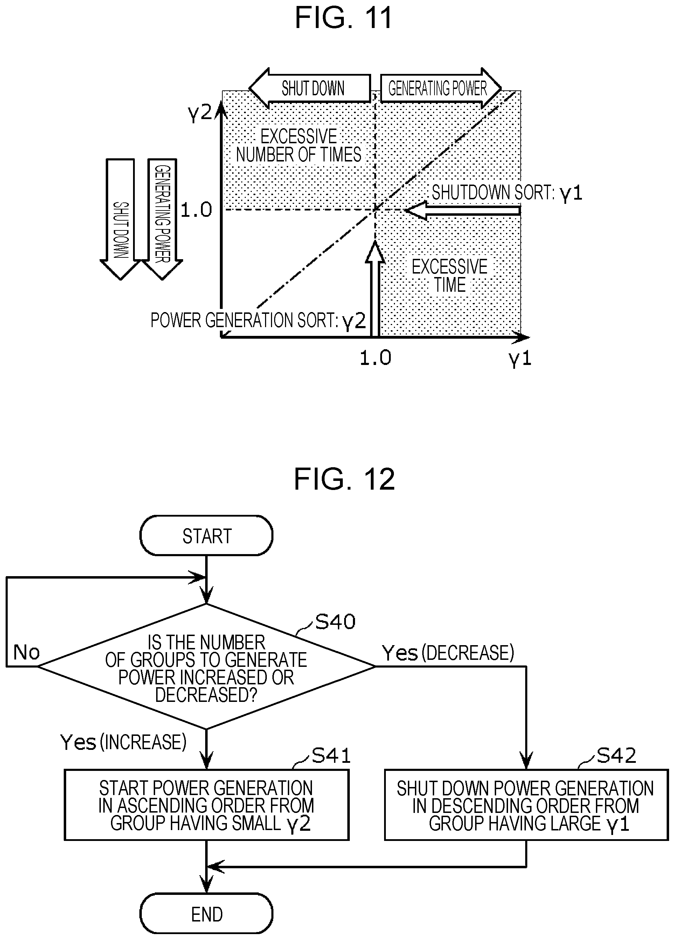

Fig. 11 is a diagram for explaining a control algorithm of Control Example 3. The horizontal axis indicates γ1. The vertical axis indicates γ2.

γ1 and γ2 have the following characteristics. That is, as indicated by two "SHUT DOWN" in Fig. 11, when the power generation units have shut down power generation, γ1 decreases because γ1 depends on the actual operating rate, and γ2 decreases because γ2 depends on the actual operating frequency. On the other hand, as indicated by two "GENERATING POWER" in Fig. 11, when the power generation units are generating power, γ1 increases because γ1 depends on the actual operating rate, and γ2 decreases because γ2 depends on the actual operating frequency. From such characteristics of γ1 and γ2, the following control is performed in Control Example 3.

That is, as indicated by "POWER GENERATION SORT y2" in Fig. 11, when the output power of the power generation system 10 is to be increased, control is performed such that a group having small γ2 is selected with priority from among the groups which have shut down power generation, and is caused to start power generation, so that γ2 of the group approaches 1.0. On the other hand, as indicated by "SHUTDOWN SORT γ1" in Fig. 11, when the output power of the power generation system 10 is to be decreased, control is performed such that a group having large γ1 is selected with priority from among the groups which are generating power, and is caused to shut down power generation, so that γ1 of the group approaches 1.0.

In this way, in Control Example 3, the deterioration control is performed by using γ1 (that is, an example of the first ratio) and γ2 (that is, an example of the second ratio) as parameters for selecting a group to shut down power generation or to start power generation.

Fig. 12 is a flowchart illustrating a processing procedure of Control Example 3. This processing procedure corresponds to one specific example of steps S12 to S15 in Fig. 3. Note that in this Control Example 3, the target operating rates of the groups A, B, C, D, and E are set to 100%, 90%, 80%, 70%, and 60%, respectively, as illustrated in Fig. 4, for example, and the target operating frequencies of the groups A, B, C, D, and E are set such that the maintenance times of the groups A, B, C, D, and E become, for example, 8 years, 9 years, 10 years, 11 years, and 12 years, respectively.

First, the control apparatus 20 determines whether or not the number of the groups to generate power is increased or decreased by comparing the demanded power and the current power (S40).

As a result, if the control apparatus 20 determines to increase the number of the groups to generate power ("Yes (INCREASE)" in S40), the control apparatus 20 selects a necessary number of groups while giving priority to groups having small γ2 among the groups which have shut down power generation, and causes the power generation units of the selected groups to start power generation (S41). The necessary number for groups to be selected is determined in consideration of the generated power which increases when the power generation units of each group are caused to generate power for a constant duration, and the output power to be increased (= the demanded power-the current power). Note that in the case where a plurality of groups are selected, the order of causing the groups to start power generation is any order. For example, the groups may be caused to start power generation in the order of selection, or may be caused to start power generation irrespective of the order of selection, or all the selected groups may be caused to start power generation simultaneously.

On the other hand, if the control apparatus 20 determines to decrease the number of the groups to generate power ("Yes (DECREASE)" in S40), the control apparatus 20 selects a necessary number of groups while giving priority to groups having large γ1 among the groups which are generating power, and causes the power generation units of the selected groups to shut down power generation (S42). The necessary number for groups to be selected is determined in consideration of the generated power which decreases when the power generation units of each group are caused to shut down power generation for a constant duration, and the output power to be decreased (= the current power-the demanded power). Note that in the case where a plurality of groups are selected, the order of causing the groups to shut down power generation is any order. For example, the groups may be caused to shut down power generation in the order of selection, or may be caused to shut down power generation irrespective of the order of selection, or all the selected groups may be caused to shut down power generation simultaneously.

With such control, in Control Example 3, the start of power generation/shutdown of power generation of the power generation units is controlled such that γ1 and γ2 approach 1.0. As a result, the maintenance times of the groups A, B, C, D, and E whose target operating rates are set to 100%, 90%, 80%, 70%, and 60%, respectively, and whose target operating frequencies are set such that the maintenance times become 8 years, 9 years, 10 years, 11 years, and 12 years, respectively, approach 8 years, 9 years, 10 years, 11 years, and 12 years, respectively. This reduces the occurrence of a situation where two or more groups reach the maintenance time at the same timing, thus reducing the occurrence of a problem that there is a necessity to replace many power generation units around the same time and a problem that the power generation output hence decreases significantly at the time of replacing the power generation units.

Note that although in Control Example 3, γ1 (that is, an example of the first ratio) and γ2 (that is, an example of the second ratio) are used as the parameters for selecting groups to start power generation or to shut down power generation, γ1 and γ2 may be used not only for this but also for determining the power generation units to start power generation or to shut down power generation among the plurality of power generation units in the group.

### (Control Example 4)

In Control Example 4, the control apparatus 20 performs the deterioration control by using both γ1 (that is, an example of the first ratio) used in Control Example 1 and γ2 (that is, an example of the second ratio) used in Control Example 2 as in the case of Control Example 3; however, the specific content of control is different from that in Control Example 3.

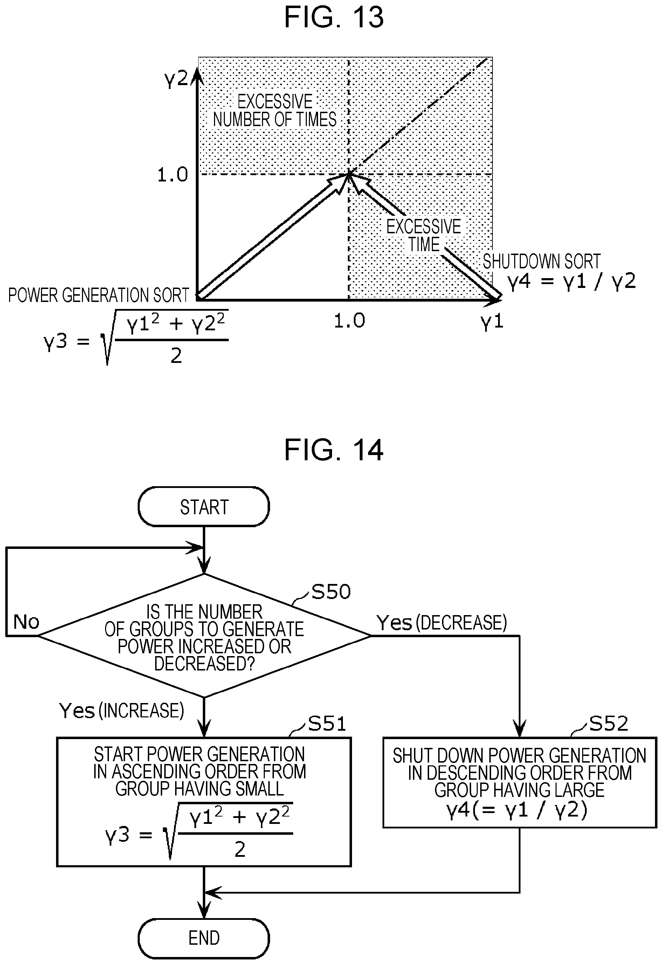

Fig. 13 is a diagram for explaining a control algorithm of Control Example 4. The horizontal axis indicates γ1. The vertical axis indicates γ2.

In Control Example 4, as indicated by "POWER GENERATION SORT y3" in Fig. 13, when the output power of the power generation system 10 is to be increased, control is performed such that a group having small γ3 is selected with priority from among the groups which have shut down power generation, and is caused to start power generation, so that y3 of the group approaches 1.0. γ3 is a root sum square of γ1 and γ2, and more specifically a square root of γ3 = ((γ1² + γ2²)/2) as illustrated in the drawing.

On the other hand, as indicated by "SHUTDOWN SORT y4" in Fig. 13, when the output power of the power generation system 10 is to be decreased, control is performed such that a group having large γ4 is selected with priority from among the groups which are generating power, and is caused to shut down power generation, so that y4 of the group approaches 1.0. γ4 is a ratio of γ1 to γ2, that is, y4 = γ1/γ2 as illustrated in the drawing.

In this way, in Control Example 4, the deterioration control is performed by using y3 and y4 as parameters for selecting a group to start power generation or to shut down power generation.

Fig. 14 is a flowchart illustrating a processing procedure of Control Example 4. This processing procedure corresponds to one specific example of steps S12 to S15 in Fig. 3. Note that in this Control Example 4, the target operating rates of the groups A, B, C, D, and E are set to 100%, 90%, 80%, 70%, and 60%, respectively, as illustrated in Fig. 4, for example, and the target operating frequencies of the groups A, B, C, D, and E are set such that the maintenance times of the groups A, B, C, D, and E become, for example, 8 years, 9 years, 10 years, 11 years, and 12 years, respectively.

First, the control apparatus 20 determines whether or not the number of the groups to generate power is increased or decreased by comparing the demanded power and the current power (S50).

As a result, if the control apparatus 20 determines to increase the number of the groups to generate power ("Yes (INCREASE)" in S50), the control apparatus 20 selects a necessary number of groups while giving priority to groups having small γ3 among the groups which have shut down power generation, and causes the power generation units of the selected groups to start power generation (S51). The necessary number for groups to be selected is determined in consideration of the generated power which increases when the power generation units of each group are caused to generate power for a constant duration, and the output power to be increased (= the demanded power-the current power). Note that in the case where a plurality of groups are selected, the order of causing the groups to start power generation is any order. For example, the groups may be caused to start power generation in the order of selection, or may be caused to start power generation irrespective of the order of selection, or all the selected groups may be caused to start power generation simultaneously.

On the other hand, if the control apparatus 20 determines to decrease the number of the groups to generate power ("Yes (DECREASE)" in S50), the control apparatus 20 selects a necessary number of groups while giving priority to groups having large γ4 among the groups which are generating power, and causes the power generation units of the selected groups to shut down power generation (S52). The necessary number for groups to be selected is determined in consideration of the generated power which decreases when the power generation units of each group are caused to shut down power generation for a constant duration, and the output power to be decreased (= the current power-the demanded power). Note that in the case where a plurality of groups are selected, the order of causing the groups to shut down power generation is any order. For example, the groups may be caused to shut down power generation in the order of selection, or may be caused to shut down power generation irrespective of the order of selection, or all the selected groups may be caused to shut down power generation simultaneously.

With such control, in Control Example 4, the start of power generation/shutdown of power generation of the power generation units is controlled such that y3 and y4 approach 1.0. As a result, the maintenance times of the groups A, B, C, D, and E whose target operating rates are set to 100%, 90%, 80%, 70%, and 60%, respectively, and whose target operating frequencies are set such that the maintenance times become 8 years, 9 years, 10 years, 11 years, and 12 years, respectively, approach 8 years, 9 years, 10 years, 11 years, and 12 years, respectively. This reduces the occurrence of a situation where two or more groups reach the maintenance time at the same timing, thus reducing the occurrence of a problem that there is a necessity to replace many power generation units around the same time and a problem that the power generation output hence decreases significantly at the time of replacing the power generation units.

Note that although in Control Example 4, y3 and y4 are used as the parameters for selecting groups to start power generation or to shut down power generation, γ3 and γ4 may be used not only for this but also for determining the power generation units to start power generation or to shut down power generation among the plurality of power generation units in the group.

As described above, the method for controlling a power generation system 10 according to the present embodiment includes, in the power generation system 10 including the power generation unit group 15 which is an assembly of power generation units, the power generation units including fuel cell: dividing the power generation unit group 15 into a plurality of groups; and controlling the power generation units such that the power generation units deteriorate in a different degree for each group.

Such a deterioration control reduces the occurrence of a situation where power generation units of two or more groups reach the maintenance time at the same timing, thus enabling the power generation system 10 including a plurality of power generation units to be operated stably for a long period of time.

Here, a difference is provided to the deterioration degree of the power generation units for each group so that when the power generation units of a certain group are being replaced because the deterioration degree of the power generation units has reached an upper limit, the deterioration degree of the power generation units of another group does not reach the upper limit. This reduces the occurrence of a problem that there is a necessity to replace many power generation units around the same time and a problem that the power generation output hence decreases significantly at the time of replacing the power generation units.

In addition, the deterioration degree corresponds to a parameter indicating an operation amount of the power generation units, and the power generation units are controlled such that when the parameter reaches an upper limit value, the power generation units are not activated next time. This ensures a time for replacing the power generation units when the power generation units have reached the ends of their lives.

Here, the parameter may include a parameter correlated with an accumulated power generation time of the power generation units. This makes it possible to control the power generation units such that the power generation units deteriorate in a different degree for each group based on the parameter correlated with an accumulated power generation time.

At this time, when the number of the groups to generate power is to be increased, the group which is caused to start power generation is selected in ascending order of a first ratio of a parameter correlated with a pace of increase in the accumulated power generation time to a target value of the parameter. Then, when the number of the groups to generate power is to be decreased, the group which is caused to shut down power generation is selected in descending order of a first ratio of a parameter correlated with a pace of increase in the accumulated power generation time to a target value of the parameter. In this way, by controlling the operating rate of each group, it becomes possible to control the power generation units such that the power generation units deteriorate in a different degree for each group.

In addition, the parameter may include a parameter correlated with the number of times of power generation of the power generation units. This makes it possible to control the power generation units such that the power generation units deteriorate in a different degree for each group based on the parameter correlated with the number of times of power generation.

At this time, when the number of the groups to generate power is to be increased, the group which is caused to start power generation is selected in ascending order of a second ratio of a parameter correlated with a pace of increase in the number of times of power generation to a target value of the parameter. Then, when the number of the groups to generate power is to be decreased, the group which is caused to shut down power generation is selected in ascending order of a second ratio of a parameter correlated with a pace of increase in the number of times of power generation to a target value of the parameter. In this way, by controlling the operating frequency of each group, it becomes possible to control the power generation units such that the power generation units deteriorate in a different degree for each group.

In addition, the parameter may include a parameter correlated with an accumulated power generation time of the power generation units and a parameter correlated with the number of times of power generation of the power generation units. At this time, when the number of the groups to generate power is to be increased, the group which is caused to start power generation is selected in ascending order of a second ratio of a parameter correlated with a pace of increase in the number of times of power generation to a target value of the parameter. In addition, when the number of the groups to generate power is to be decreased, the group which is caused to shut down power generation is selected in descending order of a first ratio of a parameter correlated with a pace of increase in the accumulated power generation time to a target value of the parameter. In this way, by controlling the operating rate and the operating frequency of each group, it becomes possible to control the power generation units such that the power generation units deteriorate in a different degree for each group.

In addition, when the number of the groups to generate power is to be increased, the group which is caused to start power generation is selected in ascending order of a root sum square of a first ratio of a parameter correlated with a pace of increase in the accumulated power generation time to a target value of the parameter and a second ratio of a parameter correlated with a pace of increase in the number of times of power generation to a target value of the parameter. In addition, when the number of the groups to generate power is to be decreased, the group which is caused to shut down power generation is selected in descending order of a ratio of a first ratio of a parameter correlated with a pace of increase in the accumulated power generation time to a target value of the parameter to a second ratio of a parameter correlated with a pace of increase in the number of times of power generation to a target value of the parameter. This makes it possible to make the operating rate and the operating frequency of each group approach the target values, to control the power generation units such that the power generation units deteriorate in a different degree for each group.

In addition, the control apparatus 20 in the power generation system 10 according to the present embodiment includes: the communicator 22 serving as a receiver which receives information regarding a deterioration degree from each of the power generation units included in the power generation unit group 15; and the controller 21 which divides the power generation unit group 15 into a plurality of groups, and controls the power generation units such that the power generation units deteriorate in a different degree for each group. This reduces the occurrence of a situation where two or more groups reach the maintenance time at the same timing, thus enabling the power generation system 10 including a plurality of power generation units to be operated stably for a long period of time.

In addition, the power generation system 10 according to the present embodiment includes: the power generation unit group 15; and the control apparatus 20 which divides the power generation unit group 15 into a plurality of groups, and controls the power generation units such that the power generation units deteriorate in a different degree for each group. This reduces the occurrence of a situation where two or more groups reach the maintenance time at the same timing, thus enabling the power generation system 10 including a plurality of power generation units to be operated stably for a long period of time.

Although the method for controlling a power generation system, the control apparatus, and the power generation system of the present disclosure have been described based on the embodiment, the present disclosure is not limited to this embodiment. Embodiments obtained by applying various types of modifications which a person skilled in the art can conceive of to the present embodiment and other embodiments constructed by combining some of the constituents in the embodiment are also encompassed in the scope of the present disclosure as long as they are not departed from the gist of the present disclosure.

For example, although in the above-described embodiment, there is one control apparatus 20 included in the power generation system 10, the control apparatus 20 may be distributed into a plurality of control apparatuses. That is, the deterioration control may be performed by cooperated control by the plurality of control apparatus thus distributed. The distributed control apparatuses or a single integrated control apparatus may be an independent apparatus, or may be an apparatus incorporated in a power generation unit.

In addition, the above-described embodiment has been described on the premise that the operation is started in a state where the power generation units of all the groups are new; however, in a case where power generation units of a certain group were replaced, or similar cases, a situation occurs in which lives already elapsed are different for each group. In this case, the control apparatus 20 performs the deterioration control by setting target values for the respective groups such that the maintenance times of the respective groups are different, taking into consideration the lives already elapsed of each group.

### Industrial Applicability

The present disclosure can be used as a power generation system or the like including a plurality of power generation units, each of the plurality of power generation units including fuel cell, and particularly as a power generation system or the like which can be operated stably for a long period of time.

### Reference Signs List

10 power generation system
15 power generation unit group
20, 30 control apparatus
21, 31 controller
22, 32 communicator
23, 33 storage
34 power conditioner
35 fuel cell stack
a1 to an, b1 to bn, c1 to cn, d1 to dn, e1 to en power generation unit

## Claims

1. A method for controlling a power generation system, the method comprising, in a power generation system including a plurality of power generation units, each of the plurality of power generation units including fuel cell:
dividing the plurality of power generation units into a plurality of groups; and
controlling the power generation units such that the power generation units deteriorate in a different degree for each group.

2. The method for controlling a power generation system according to claim 1, wherein
a difference is provided to a deterioration degree of the power generation units for each group so that when the power generation units of a certain group are being replaced because the deterioration degree of the power generation units has reached an upper limit, the deterioration degree of the power generation units of another group does not reach the upper limit.

3. The method for controlling a power generation system according to claim 1, wherein
the deterioration degree corresponds to a parameter indicating an operation amount of the power generation units, and
the power generation units are controlled such that when the parameter reaches an upper limit value, the power generation units are not activated next time.

4. The method for controlling a power generation system according to claim 3, wherein
the parameter includes a parameter correlated with an accumulated power generation time of the power generation units.

5. The method for controlling a power generation system according to claim 4, wherein
when a number of the groups to generate power is to be increased, the group which is caused to start power generation is selected in ascending order of a first ratio of a parameter correlated with a pace of increase in the accumulated power generation time to a target value of the parameter.

6. The method for controlling a power generation system according to claim 4 or 5, wherein
when a number of the groups to generate power is to be decreased, the group which is caused to shut down power generation is selected in descending order of a first ratio of a parameter correlated with a pace of increase in the accumulated power generation time to a target value of the parameter.

7. The method for controlling a power generation system according to claim 3, wherein
the parameter includes a parameter correlated with a number of times of power generation of the power generation units.

8. The method for controlling a power generation system according to claim 7, wherein
when a number of the groups to generate power is to be increased, the group which is caused to start power generation is selected in ascending order of a second ratio of a parameter correlated with a pace of increase in the number of times of power generation to a target value of the parameter.

9. The method for controlling a power generation system according to claim 7, wherein
when a number of the groups to generate power is to be decreased, the group which is caused to shut down power generation is selected in ascending order of a second ratio of a parameter correlated with a pace of increase in the number of times of power generation to a target value of the parameter.

10. The method for controlling a power generation system according to claim 3, wherein
the parameter includes a parameter correlated with an accumulated power generation time of the power generation units and a parameter correlated with a number of times of power generation of the power generation units.

11. The method for controlling a power generation system according to claim 10, wherein
when a number of the groups to generate power is to be increased, the group which is caused to start power generation is selected in ascending order of a second ratio of a parameter correlated with a pace of increase in the number of times of power generation to a target value of the parameter.

12. The method for controlling a power generation system according to claim 10 or 11, wherein
when a number of the groups to generate power is to be decreased, the group which is caused to shut down power generation is selected in descending order of a first ratio of a parameter correlated with a pace of increase in the accumulated power generation time to a target value of the parameter.

13. The method for controlling a power generation system according to claim 10, wherein
when a number of the groups to generate power is to be increased, the group which is caused to start power generation is selected in ascending order of a root sum square of a first ratio of a parameter correlated with a pace of increase in the accumulated power generation time to a target value of the parameter and a second ratio of a parameter correlated with a pace of increase in the number of times of power generation to a target value of the parameter.

14. The method for controlling a power generation system according to claim 10, wherein
when a number of the groups to generate power is to be decreased, the group which is caused to shut down power generation is selected in descending order of a ratio of a first ratio of a parameter correlated with a pace of increase in the accumulated power generation time to a target value of the parameter to a second ratio of a parameter correlated with a pace of increase in the number of times of power generation to a target value of the parameter.

15. A control apparatus comprising:
a receiver which receives information indicating a deterioration degree from each of a plurality of power generation units, each of the plurality of power generation units including fuel cell; and
a controller which divides the plurality of power generation units into a plurality of groups and controls the power generation units such that the power generation units deteriorate in a different degree for each group.

16. A power generation system comprising:
a plurality of power generation units, each of the plurality of power generation units including fuel cell; and
the control apparatus according to claim 15.
